Europäisches Patentamt

European Patent Office

Office européen des brevets

(11) Numéro de publication : **0 461 981 A2**

# (12) DEMANDE DE BREVET EUROPEEN

(21) Numéro de dépôt : **91401523.5**

(51) Int. Cl.⁵ : **B60G 17/04, F16F 9/06**

(22) Date de dépôt : **10.06.91**

Une requête en rectification de la description ainsi que la révendication no.1 a été présentée conformément à la règle 88 CBE. Il est statué sur cette requête au cours de la procédure engagée devant la division d'examen (Directives relatives à l'examen pratiqué à l'OEB, A-V, 2.2).

(30) Priorité : **13.06.90 FR 9007336**
**06.02.91 FR 9101318**

(43) Date de publication de la demande :
**18.12.91 Bulletin 91/51**

(84) Etats contractants désignés :
**DE FR GB IT**

(71) Demandeur : **MESSIER BUGATTI**
**Zone aéronautique Louis Bréguet B.P. 40**
**F-78140 Velizy Villacoublay (FR)**

(72) Inventeur : **Derrien, Michel**
**16 rue du Parc de Clagny**
**F-78000 Versailles (FR)**
Inventeur : **Rouzaud, Dominique**
**27 rue du Marais**
**F-91470 Angervilliers (FR)**

(74) Mandataire : **Fruchard, Guy et al**
**CABINET BOETTCHER 23, rue la Boétie**
**F-75008 Paris (FR)**

(54) **Dispositif ressort-amortisseur à course variable pour véhicule.**

(57)     Dans le mode de réalisation préféré, le dispositif comporte un caisson (101), une tige coulissante (102) montée pour coulisser dans le caisson, et une tige de commande (117) comportant des butées de fin de course en compression et en détente (118,120) associées à un piston de commande (121) pour déplacer la tige de commande (117) vers une position rétractée ou étendue par rapport au caisson, la tige coulissante (117) ayant une course (c) supérieure à la distance (d) séparant la butée de fin de course en compression (118) d'une extrémité immédiatement adjacente de la chambre correspondante (104) pour une position étendue de la tige de commande (117).

EP 0 461 981 A2

$\underline{FIG\_3}$

La présente invention concerne un dispositif ressort-amortisseur à course variable pour un véhicule, notamment un véhicule automobile.

On sait que lorsqu'un véhicule, en particulier un véhicule automobile, est amené à rouler sur un sol présentant différents états de surface, il est souhaitable de pouvoir adapter les caractéristiques du dispositif ressort-amortisseur à l'état de surface du sol. De même, lorsqu'on souhaite adopter différents types de conduite, il est souhaitable d'adapter les caractéristiques du dispositif ressort-amortisseur au type de conduite désiré. Le dispositif ressort-amortisseur selon l'invention s'applique plus particulièrement, bien que non exclusivement, à un véhicule automobile de haute performance destiné à rouler sur route ou sur circuit.

Selon l'invention, on prévoit un dispositif ressort-amortisseur comportant un caisson, une tige coulissante montée pour coulisser dans le caisson et délimiter avec celui-ci une chambre d'amortissement en compression et une chambre d'amortissement en détente contenant un liquide d'amortissement et reliées entre elles par des moyens de laminage, la chambre d'amortissement en compression étant reliée par un conduit de liaison à au moins un accumulateur contenant un gaz sous pression, ce dispositif comportant en outre au moins un piston de commande pour déplacer la tige coulissante vers une position rétractée ou étendue par rapport au caisson, dans lequel chaque piston de commande comporte au moins une butée de fin de course réalisée par un épaulement en saillie sur le piston de commande en regard d'un organe de butée correspondant de la tige coulissante.

Ainsi, lors de la manoeuvre de chaque piston de commande, on modifie non seulement la position moyenne de la tige coulissante mais également la course de la tige coulissante par un déplacement des épaulements formant des butées pour la tige coulissante.

Selon un mode de réalisation de l'invention, le dispositif comporte deux pistons de commande portant chacun une butée de fin de course en saillie de part et d'autre d'une collerette portée par la tige coulissante.

Selon un autre mode de réalisation de l'invention le piston de commande est associé à une tige de commande coaxiale à la tige coulissante et comportant une butée de fin de course en compression et une butée de fin de course en détente, la tige de commande ayant une course supérieure à la distance séparant la butée de fin de course en compression d'une extrémité immédiatement adjacente de la chambre d'amortissement en compression pour une position étendue de la tige de commande.

Ainsi, lorsque l'on fait passer la tige de commande de la position étendue à la position rétractée, la butée de fin de course en compression s'escamote et la tige coulissante vient en butée en compression sur l'extrémité de la chambre d'amortissement en compression, alors que la butée de fin de course en détente est déplacée sur une distance égale à la course de la tige de commande de sorte que la course de la tige coulissante est réduite. Simultanément, la rétraction de la tige de commande libère dans la chambre d'amortissement en compression un volume qui est compensé par une rétraction de la tige coulissante, ce qui fait varier la hauteur du véhicule par rapport au sol.

Selon une version avantageuse de l'invention, le piston de commande a une face reliée à la tige de commande associée à une chambre de rétraction de la tige de commande constamment reliée à une source de fluide sous pression, et une face opposée associée à une chambre d'extension de la tige de commande reliée à la même source de fluide sous pression par une ligne d'alimentation comportant un organe de coupure de ligne. Ainsi, en cas de défaillance de certains organes de commande, le dispositif ressort-amortisseur est automatiquement ramené dans la position correspondant à la sécurité maximale de tenue de route.

Selon un aspect avantageux de l'invention, le caisson est relié à deux accumulateurs réunis par le conduit de liaison et le conduit de liaison comporte des moyens pour séparer l'un des accumulateurs de la chambre d'amortissement en compression. De préférence les moyens pour séparer l'un des accumulateurs de la chambre d'amortissement en compression comprennent un distributeur commandé par la ligne d'alimentation de la chambre d'extension de la tige de commande. Ainsi, lorsque la chambre d'extension de la tige de commande est alimentée pour mettre le dispositif ressort-amortisseur en position de route, le deuxième accumulateur est automatiquement mis en service et diminue la raideur du dispositif.

Selon encore un autre aspect avantageux de l'invention, le dispositif ressort-amortisseur comporte un organe de relevage maximal comprenant une réserve de liquide hydraulique reliée à la chambre d'amortissement en compression et un piston disposé dans la réserve pour pousser le liquide hydraulique dans la chambre d'amortissement en compression. Ainsi, on réhausse à volonté le dispositif ressort-amortisseur, en particulier pour passer un obstacle à faible vitesse.

D'autres caractéristiques et avantages de l'invention apparaîtront à la lecture de la description qui suit d'un mode de réalisation particulier non limitatif de l'invention en liaison avec les figures ci-jointes parmi lesquelles :

  – la figure 1 est une vue en coupe axiale schématique partielle du dispositif ressort amortisseur selon un premier mode de réalisation de l'invention dans une première position d'utilisation,
  – la figure 2 est une vue analogue à celle de la figure 1 pour une seconde position d'utilisation,

– la figure 3 est une vue schématique du dispositif ressort-amortisseur selon un second mode de réalisation de l'invention en position de route, l'amortisseur étant représenté selon une coupe axiale.

– la figure 4 est une vue analogue à celle de la figure 3 du dispositif ressort-ammortisseur en position de circuit.

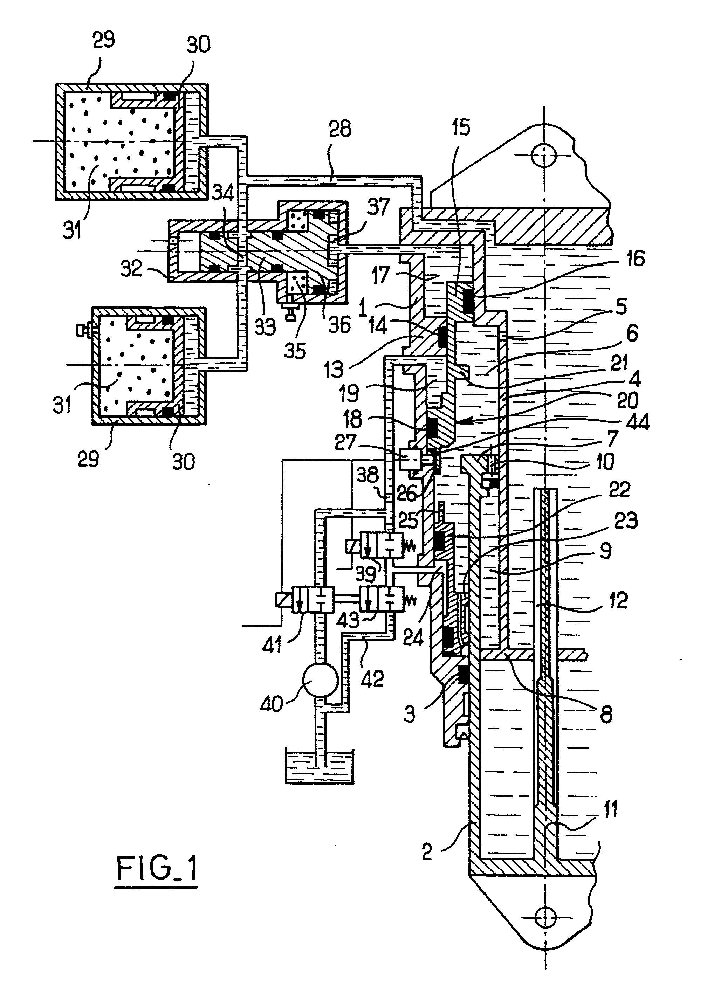

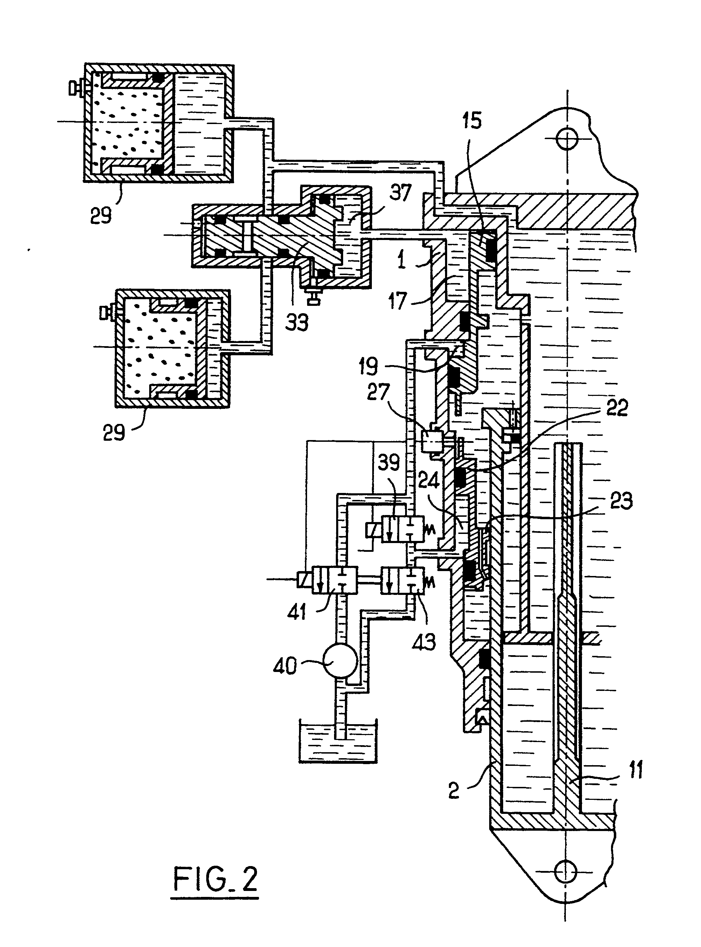

En référence aux figures 1 et 2, le dispositif selon l'invention comporte un caisson 1 dans lequel une tige coulissante 2 est montée pour coulisser de façon étanche au moyen d'un joint d'étanchéité 3. Une tige plongeuse 4 est fixée à l'intérieur du caisson 1 et s'étend coaxialement à celui-ci. Au voisinage de son extrémité supérieure, la tige plongeuse 4 comporte un orifice de passage 5 assurant une communication entre l'intérieur de la tige plongeuse 4 et une chambre intermédiaire 6 comprise entre la tige plongeuse 4 et le caisson 1. La tige coulissante 2 comporte une collerette supérieure 7 qui coulisse sur la surface externe de la tige plongeuse 4. A son extrémité inférieure, la tige plongeuse 4 comporte une plaque transversale 8 s'étendant jusqu'à la surface interne de la tige coulissante 2 et délimitant avec celle-ci et avec la collerette 7 une chambre de laminage en détente 9 qui est en communication avec la chambre intermédiaire 6 par des clapets de laminage 10. Une tige de laminage 11 est fixée à la tige coulissante 2 coaxialement à celle-ci et s'étend à travers une ouverture de l'extrémité inférieure de la tige plongeuse 4. La tige de laminage 11 comporte des rainures de laminage 12 ayant une profondeur dégressive depuis l'extrémité engagée dans la tige plongeuse 4 vers l'extrémité opposée.

Au voisinage de son extrémité supérieure, le caisson 1 comporte un redent 13 équipé d'un joint d'étanchéité 14 sur lequel coulisse un piston de commande annulaire étagé 15 ayant une section en Z. A sa partie supérieure, le piston de commande 15 comporte un joint d'étanchéité 16 qui coulisse sur la surface externe de la tige plongeuse 4 et délimite avec celle-ci et avec le caisson une première chambre de commande 17. A son extrémité inférieure, le piston de commande 15 comporte un joint d'étanchéité 18 en regard de la surface interne du caisson 1 et délimite celui-ci une seconde chambre de commande 19. La face interne 20 du piston de commande 15 délimite avec la tige plongeuse 4 un passage pour l'extrémité supérieure de la tige coulissante 2 qui peut ainsi coulisser à l'intérieur du caisson 1 jusqu'à une butée de compression 21 portée par la face interne du piston de commande 15.

A sa partie inférieure, le caisson comporte un piston étagé 22 dont un épaulement 23 forme une butée de détente pour la collerette 7 de la tige coulissante 2. De plus, le piston 22 délimite avec la surface interne du caisson 1 une chambre de positionnement 24 de la butée de détente 23. A sa partie supérieure, le piston 22 comporte une languette de repérage 25 tandis qu'à sa partie inférieure le piston de commande 15 comporte une languette de repérage 26. Les languettes de repérage 25 et 26 sont détectées lorsqu'elles viennent en regard d'un détecteur de proximité 27 fixé sur la paroi du caisson 1. Le caisson et la tige coulissante sont remplis de liquide d'amortissement.

A la partie supérieure du caisson, le volume interne de la tige plongeuse 4 est relié par un conduit de liaison 28 à deux accumulateurs 29 montés en parallèle. Chacun des accumulateurs comporte un piston 30 monté de façon coulissante à l'intérieur de l'accumulateur et ayant une face soumise à un gaz sous pression 31 et l'autre face soumise au liquide d'amortissement. Un distributeur à tiroir 32 est monté sur l'une des branches de liaison d'un des accumulateurs 29. Le distributeur à tiroir 32 comporte un tiroir 33 comprenant un segment de conduit de raccordement 34 et monté pour coulisser dans le distributeur 32 entre une position où segment de conduit de raccordement 34 coïncide avec le conduit de liaison 28 et une position où le conduit de raccordement 34 est décalé par rapport au conduit de liaison 28. Le tiroir 33 est rappelé dans la position où le segment de conduit de raccordement 34 coïncide avec le conduit de liaison 28 par un gaz sous pression introduit dans une chambre de rappel annulaire 35 délimitée par un épaulement 36 du tiroir 33. La face opposée de l'épaulement et l'extrémité du tiroir forment une face de commande délimitant une chambre de manoeuvre 37 qui est reliée à la première chambre de commande 17 du caisson 1.

La seconde chambre de commande 19 du caisson 1 est reliée à la chambre de positionnement 24 de la butée mobile 23 par un conduit de raccordement 38 sur lequel est montée une vanne d'admission commandée 39. La seconde chambre de commande 19 est également reliée en parallèle à une source d'alimentation en fluide de commande 40 par l'intermédiaire d'une vanne commandée 41. La chambre de positionnement 24 est reliée à l'échappement de la source d'alimentation en fluide de commande 40 par un conduit 42 sur lequel est disposé une vanne d'échappement commandée 43 solidaire de la vanne commandée 41. L'organe de commande des vannes commandées 39 et 41 est relié d'une part au détecteur de proximité 27 et, d'autre part, à un organe de commande électrique non représenté.

Le fonctionnement du dispositif selon l'invention est le suivant : dans la position représentée dans la figure 1, qui est la position de route pour un véhicule adapté à circuler sur une route ou sur un circuit, la seconde chambre de commande 19 est remplie de fluide de commande et le piston 15 est en butée sur un épaulement annulaire 44 de la surface interne du caisson 1. La languette de repérage 26 est détecté par le détecteur de proximité 27. Les vannes commandées 39, 41 et 43 sont fermées. Dans ces conditions, le piston 15 est verrouillé hydrauliquement en position basse de sorte que la première chambre de commande 17 est à son volume maximum. Le tiroir 33 est alors en butée vers la droite sous l'effet du gaz comprimé de la chambre 35 et le segment de conduit de raccordement 34 est en coïncidence avec le conduit de liaison 28. Les deux accumulateurs 29 sont donc en service et la butée de détente 23 est en disposition basse. Dans cette position, la raideur du dispositif ressort-amortisseur est faible et le laminage par la tige de laminage 11 est également relativement faible ce qui entraîne une suspension relativement confortable pour la conduite sur route.

Lorsque l'on souhaite passer à la position de conduite sur circuit, ou une position de conduite plus sportive sur route si le revêtement de celle-ci le permet, la vanne commandée 39 est ouverte et établit ainsi une liaison hydraulique entre la seconde chambre de commande 19 et la chambre de positionnement 24. Sous l'effet de la charge statique du véhicule sur l'amortisseur, le piston 15 est repoussé vers le haut et le liquide de commande passe de la chambre de commande 19 à la chambre de positionnement 24, ce qui provoque la montée du piston 22 entraînant la butée de détente 23. Simultanément, le liquide de commande est chassé de la première chambre de commande 17 et repousse le tiroir 33 vers la gauche interrompant ainsi la liaison hydraulique entre le caisson et l'un des accumulateurs 29. Lorsque la languette de repérage 25 est détectée par le détecteur de proximité 27, la vanne commandé 39 est à nouveau fermée. Lors du déplacement du piston 15 vers le haut, le volume libéré dans la chambre intermédiaire 6 par ce déplacement est compensé par une rétraction de la tige coulissante 2 et un déplacement correspondant de la tige de laminage 11. Dans cette position représentée sur la figure 2, la raideur du dispositif ressort-amortisseur est donc augmentée par la mise hors service de l'un des accumulateurs 29 et le laminage est également augmenté par suite du déplacement de la tige de laminage 11.

Lorsque l'on souhaite repasser en position de route, les vannes commandées 41 et 43 sont ouvertes de sorte que du fluide de commande est admis dans la seconde chambre de commande 19 et repousse le piston 15 vers le bas, tandis que la chambre de positionnement 24 est mise à l'échappement et le piston 22 reprend la position représentée sur la figure 1. Lorsque la languette de repérage 26 est détectée par le détecteur de position 27, les vannes commandées 41 et 43 sont à nouveau fermées pour verrouiller le dispositif dans la position représentée sur la figure 1.

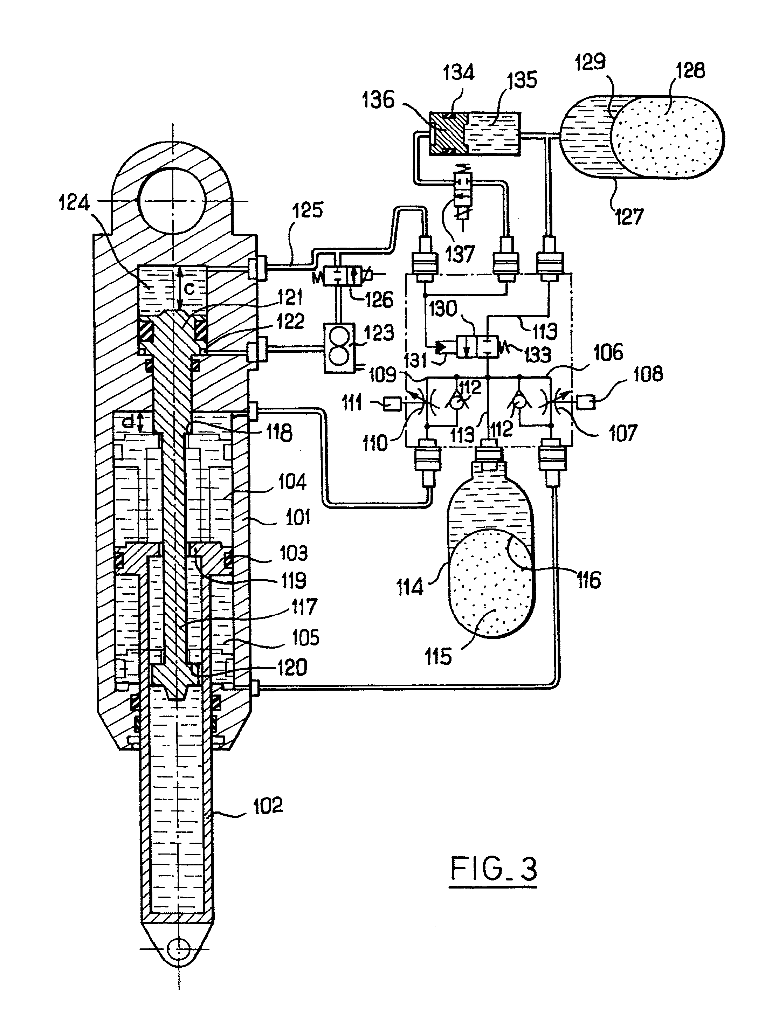

En référence à la figure 3, le dispositif ressort-amortisseur selon le second mode de réalisation de l'invention comporte un caisson 101 dans lequel est montée une tige coulissante 102 montée pour coulisser dans le caisson 101 par l'intermédiaire d'un joint d'étanchéité 103. La tige coulissante délimite ainsi avec le caisson 101 une chambre d'amortissement en compression 104 et une chambre d'amortissement en détente 105. Les chambres d'amortissement sont reliées l'une à l'autre par des moyens de laminage portés par un bloc auxiliaire dans le mode de réalisation illustré. Ces moyens de laminage comprennent un circuit de laminage en détente 106 comportant une buse de laminage 107 de section réglable, par exemple au moyen d'un moteur électrique 108 commandé à distance. Les moyens de laminage comportent en outre un circuit de laminage en compression 109 comportant également une buse de laminage de section réglable 110 et un moteur de commande 111. Les circuits de laminage en compression et en détente sont isolés l'un de l'autre par des clapets anti-retour 112.

Les chambres d'amortissement en compression et en détente sont remplies de liquide hydraulique et reliées par un conduit de liaison 113 à un premier accumulateur 114 assurant une fonction de ressort et comportant une chambre à gaz sous pression 115 séparée du liquide hydraulique par une membrane 116.

Dans le mode de réalisation préféré illustré, l'accumulateur 114 est relié entre les circuits de laminage de façon a être en liaison directe avec la chambre d'amortissement en compression 104 lors d'une détente de l'amortisseur, et par l'intermédiaire de la vanne de laminage en compression 110 lors d'une compression de l'amortisseur.

Une tige de commande 117 est disposée à l'intérieur et coaxialement au caisson 101 et à la tige coulissante 102. La tige coulissante 102 est creuse et la tige de commande 117 s'étend églament à l'intérieur de la tige coulissante 102. La tige de commande comporte un épaulement annulaire supérieur 118 en saillie sur la tige coulissante et formant une butée de fin de course en compression de la tige coulissante. La butée de fin de course en compression 118 coopère avec un organe de butée de la tige coulissante formée par une collerette annulaire 119 réalisée à l'extrémité supérieure de la tige coulissante. A son extrémité inférieure, la tige de commande comporte un épaulement annulaire 120 en saillie sur la tige de commande et formant une butée de fin de course en détente de la tige coulissante 102.

La tige de commande 117 est associée à un piston de commande 121 monté pour coulisser dans le caisson. Le piston de commande 121 a une face reliée à la tige de commande qui délimite avec les parois de l'alésage dans lequel il est monté pour coulisser une chambre de rétraction 122 de la tige de commande reliée à une source de fluide sous pression 123. La face opposée du piston délimite une chambre d'extension 124 de la tige de commande. La chambre d'extension 124 est reliée à la source de fluide sous pression 123 par une ligne d'alimentation 125 comportant un organe de coupure de ligne tel qu'une électrovanne 126.

Par ailleurs, la chambre d'amortissement en compression 104 est également reliée à un second accumulateur 127 monté en parallèle au premier accumulateur 114 et comportant une chambre de gaz sous pression 128 séparée du liquide hydraulique par une membrane 129. La partie de conduit de liaison 113 assurant la liaison avec le second accumulateur 127 comporte un distributeur 130. Le distributeur 130 est normalement rappelé par un organe élastique 133 vers une position où la liaison avec l'accumulateur 127 est interrompue. L'entrée de commande 131 opposée à l'organe élastique 133 est reliée à la ligne d'alimentation 125 de la chambre d'extension 124 de la tige de commande.

Dans le mode de réalisation préféré illustré, le dispositif ressort-amortisseur selon l'invention comporte enfin un organe de relevage maximal 134 comprenant une réserve de liquide hydraulique 135 reliée à la chambre d'amortissement en compression et un piston 136 disposé dans la réserve 135 pour pousser le liquide hydraulique vers la chambre d'amortissement en compression. La face du piston 136 opposée à la réserve 135 est reliée à la ligne d'alimentation 125 par l'intermédiaire d'un organe de coupure de ligne 137 tel qu'une électrovanne.

Sur la figure 3, le dispositif ressort-amortisseur est représenté dans la position de route. Dans cette position, l'électrovanne 126 a été excitée pour assurer une liaison entre la source de fluide sous pression 123 et la ligne d'alimentation 125 de sorte que la chambre d'extension 124 de la tige de commande est alimentée en fluide de commande. En raison de la différence de surface efficace de la face du piston tournée vers la chambre d'extension 124 et de la face du piston tournée vers la chambre de rétraction 122, le piston 121 est poussé dans le sens d'une extention de la tige de commande 117. Simultanément, le tiroir du distributeur 130 est repoussé à l'encontre de l'organe élastique 133 et le distributeur 130 assure une liaison de la chambre d'amortissement en compression 104 avec les deux accumulateurs 114 et 127. Dans cette position, la tige coulissante 102 a une position moyenne représentée sur la figure 3 et, lors des mouvements du véhicule, peut venir en butée contre la butée de fin de course en compression 118 ou la butée de fin de course en détente 120 comme représenté en trait continu fin sur la figure 3.

A ce propos, on notera que la butée de fin de course en détente coïncide de préférence en position de route avec l'extrémité inférieure de la chambre d'amortissement en détente 105 afin que la tige coulissante sollicite le moins possible la butée de fin de course en détente 120 de la tige de commande 117.

Dans cette position, si un obstacle inhabituel doit être franchi, la tige coulissante peut être étendue par rapport à sa position moyenne afin de réhausser le véhicule en excitant l'électrovanne 137 pour assurer une liaison avec la ligne d'alimentation 125 et repousser le piston 136 de l'organe de relevage maximal 134, ce qui a pour effet d'envoyer le liquide hydraulique de la réserve 135 dans la chambre d'amortissement en compression 104.

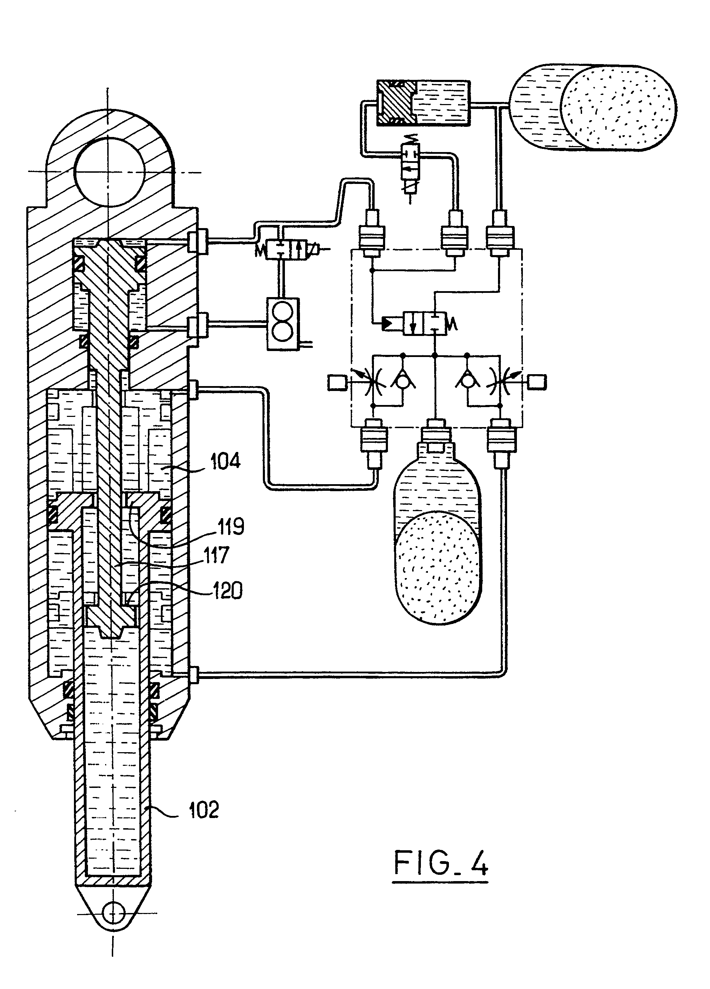

Lorsque l'on souhaite passer à une position de circuit qui correspond à une position plus basse du véhicule et à une raideur plus grande du dispositif ressort-amortisseur selon l'invention, l'alimentation de l'électrovanne 126 est coupée de sorte que la chambre d'extension 124 de la tige de commande 117 est purgée par l'intermédiaire d'une ligne de retour non représentée. Sous l'effet de la pression du fluide dans la chambre de rétraction 122 de la tige de commande, le piston 121 remonte et entraîne la tige de commande 117 vers le haut. A ce propos, on remarquera que la course $c$ du piston, et donc la course de la tige de commande, est supérieure à la distance $d$ qui sépare la butée de fin de course en compression 118 de l'extrémité immédiatement adjacente de la chambre d'amortissement en compression 104 pour une position étendue de la tige de commande 17 (voir figure 3). Lorsque la tige de commande 117 est en position rétractée comme illustré par la figure 4, la butée de fin de course en compression 118 de la tige de commande est donc en retrait par rapport à l'extrémité adjacente de la chambre d'amortissement en compression 104 de sorte que la butée de fin de course en compression de la tige coulissante 102 est cette fois assurée par l'extrémité de la chambre d'amortissement en compression 104. Simultanément, la butée de fin de course en détente 120 est remontée d'une distance égale à la course du piston 121 de sorte que la course de la tige coulissante 102 est réduite par rapport à la course qu'elle pouvait avoir dans la position de route. Simultanément, le volume qui a été dégagé par le retrait de la partie supérieure large de la tige de commande est compensé par une rétraction de la tige coulissante 102 pour sa position moyenne. Enfin, le distributeur 130 est repoussé par l'organe élastique 133 de sorte que le premier accumulateur 114 seul est en service, ce qui assure une plus grande raideur du dispositif ressort-amortisseur.

Bien entendu l'invention n'est pas limitée aux modes de réalisation décrits et on peut y apporter des variantes de réalisation sans sortir du cadre de l'invention. En particulier, dans le premier mode de réalisation, bien que les organes de laminage aient été prévus à l'intérieur du caisson 1, ces organes de laminage pourraient être disposés sur le conduit de liaison 28 en un point intermédiaire entre les accumulateurs 29 et le caisson 1.

De même, bien que les amortisseurs 29 aient été représentés avec un piston séparateur 30 disposé entre le liquide d'amortissement et le gaz sous pression 31 pour maintenir une séparation du liquide et du gaz quel que soit la position de l'accumulateur par rapport au véhicule, on peut prévoir des accumulateurs ne comportant aucune cloison séparatrice, les accumulateurs étant alors nécessairement disposés verticalement pour que le gaz sous pression reste au-dessus du liquide d'amortissement.

Bien que dans le second mode de réalisation illustré la tige de commande 117 soit disposée de façon axiale et s'étende à l'intérieur de la tige coulissante 102, on peut prévoir une tige de commande tubulaire s'étendant le long de la paroi des chambres d'amortissement à l'extérieur de la tige coulissante 102.

De même, bien que les moyens de laminage en compression et en détente illustrés soient réalisés sur un bloc auxiliaire, ce qui permet d'assurer un réglage du degré de laminage, on peut prévoir des moyens de laminage réalisés sur la tige coulissante.

On peut également remplacer la source de fluide sous pression unique 123 par différentes sources de fluide sous pression qui sont mises en service séparément pour alimenter l'organe correspondant au régime de fonctionnement souhaité.

## Revendications

1. Dispositif ressort-amortisseur comportant un caisson (1;101), une tige coulissante (2;102) montée pour coulisser dans le caisson et délimiter avec celui-ci une chambre d'amortissement en compression (6;104) et une chambre d'amortissement en détente (9;105) contenant un liquide d'amortissement et reliées entre elles par des moyens de laminage, la chambre d'amortissement en compression (6;104) étant reliée par un conduit de liaison (28;113) à au moins un accumulateur (29;114) contenant un gaz sous pression, au moins un piston de commande (15,22;121) pour déplacer la tige de commande vers une position rétractée ou étendue par rapport au caisson, caractérisé en ce que chaque piston de commande comporte au moins une butée de fin de course (21,23;118,120) réalisée par un épaulement en saillie sur la tige de commande en regard d'un organe de butée correspondant de la tige coulissante.

2. Dispositif ressort-amortisseur selon la revendication 1 caractérisé en ce qu'il comporte deux pistons de commande (15,22), portant chacun une butée de fin de course (21,23) en saillie de part et d'autre d'une collerette (7) portée par la tige coulissante.

3. Dispositif ressort-amortisseur selon la revendication 2 caractérisé en ce qu'il comporte une tige plongeuse (4) fixée dans le caisson coaxialement à la tige coulissante, un premier piston de commande étagé (15) monté pour coulisser de façon étanche entre la tige plongeuse et le caisson et comportant une butée de fin de course en compression (21) de la tige coulissante, et un second piston de commande étagé (22) comportant une butée de fin de course en détente (23) pour la tige coulissante.

4. Dispositif ressort-amortisseur selon la revendication 3 caractérisée en ce qu'il comporte des moyens (27) pour détecter une fin de course de la butée de détente et commander un verrouillage hydraulique de la position de la butée de détente.

5. Dispositif ressort-amortisseur selon l'une des revendications 2 à 4 caractérisé en ce qu'il comporte une tige de laminage (11) fixée à la tige coulissante (2) coaxialement à celle-ci et traversant le fond de la tige plongeuse (4), cette tige de laminage (11) ayant des rainures de laminage (12) de profondeur dégressive depuis une extrémité engagée dans la tige plongeuse (4) vers une extrémité opposée.

6. Dispositif ressort-amortisseur selon la revendication 1 caractérisé en ce que le piston de commande (121) est associé à une tige de commande (117) coaxiale à la tige coulissante (102) et comportant une butée de fin de course en compression (118) et une butée de fin de course en détente (120, et en ce que la tige de commande (117) a une course $c$ supérieure à la distance $d$ séparant la butée de fin de course en compression (118) d'une extrémité immédiatement adjacente de la chambre d'amortissement en compression (104) pour une position étendue de la tige de commande.

7. Dispositif ressort-amortisseur selon la revendication 6, caractérisé en ce que le piston de commande (121) a une face reliée à la tige de commande associée à une chambre de rétraction (122) de la tige de commande constamment reliée à une source de fluide (123) sous pression, et une face opposée associée à une chambre d'extension (124) de la tige de commande reliée à la même source de fluide sous pression par une ligne d'alimentation (125) comportant un organe de coupure de ligne (126).

8. Dispositif ressort-amortisseur selon la revendication 6 ou la revendication 7, caractérisé en ce que la chambre d'amortissement en compression (104) est reliée à deux accumulateurs (114,127) et en ce que conduit de liaison (113) comporte des moyens (130) pour séparer l'un des accumulateurs de la chambre d'amortissement en compression.

9. Dispositif ressort-amortisseur selon la revendication 7 et la revendication 8 caractérisé en ce que les moyens pour séparer l'un des accumulateurs de la chambre d'amortissement en compression comprennent un distributeur (130) commandé par la ligne d'alimentation (125) de la chambre d'extension (124) de la tige de commande (117).

10. Dispositif ressort-amortisseur selon l'une des revendications 6 à 9, caractérisé en ce qu'il comporte un organe de relevage maximal (134) comprenant une réserve de liquide hydraulique (135) reliée à la chambre d'amortissement en compression (104) et un piston (136) disposé dans la réserve (135) pour pousser le liquide hydraulique vers la chambre d'amortissement en compression (104).

11. Dispositif ressort-amortisseur selon les revendications 7 et 10 caractérisé en ce que le piston (136) du dispositif de relevage maximal (134) est commandé par la ligne d'alimentation (125) de la chambre d'extension de la tige de commande par l'intermédiaire d'un organe de coupure de ligne (137).

## FIG_1

FIG. 2

FIG. 3

FIG. 4